# EUROPEAN PATENT APPLICATION

(11) **EP 3 059 611 A1**
(43) Date of publication of application: **24.08.2016**
(21) Application number: 16154768.2
(22) Date of filing: 09.02.2016
(51) Int. Cl.: G01S 19/39, G01S 19/14

(54) **GNSS-BASED OBSTRUCTION MAPPING**

(30) Priority: 12.02.2015 US 201562115209 P
(71) Applicant: AGCO CORPORATION, Duluth, Georgia 30096-2568 (US)
(72) Inventor: Matthews, Paul Ross, Hesston, Kansas KS67062-2094 (US)
(74) Representative: AGCO Intellectual Property Department

(57) **Abstract**

In one embodiment, a method comprising, while traversing a field, monitoring for changes in satellite tracking; and providing a map of one or more obstructions based on satellite data recorded proximally to a detected change in the satellite tracking.

## Description

### TECHNICAL FIELD

The present disclosure is generally related to agriculture technology, and, more particularly, precision farming.

### BACKGROUND

Guidance systems in agriculture that are based on global positioning satellite systems (GNSS) rely on having visibility of a sufficient number of satellites to resolve an accurate position to auto-steer a machine. To receive a signal from a satellite, a GNSS receiver needs a line of sight that is unimpeded by obstructions, such as trees in or around the field, buildings, surface topologies, and/or other machines. When a machine approaches or drives along a side of a region lined with obstructions, reception of signals from some satellites is lost in the obstructed part of the sky. These obstructions may cause severe degradation of position up to, and including, preventing guidance completely due to insufficient position information.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIG. 1 is a schematic diagram that illustrates an example environment in which an embodiment of an example obstruction mapping system may be implemented.
FIGS. 2A-2C are schematic diagrams that illustrate an example obstruction map and a triangulation process used by an embodiment of an example obstruction mapping system during traversal of the environment of FIG. 1.
FIG. 3 is a schematic diagram that illustrates an accuracy map provided by an embodiment of an example obstruction mapping system based on the obstruction map of FIG. 2A.
FIG. 4A is a schematic diagram that illustrates an example environment with an in-field obstruction in which an embodiment of an example obstruction mapping system may be implemented.
FIG. 4B is a schematic diagram that illustrates an example obstruction map that may be provided by an embodiment of an example obstruction mapping system based on the in-field obstruction of FIG. 4A.
FIG. 5 is a schematic diagram that illustrates an example undulating environment in which an embodiment of an example obstruction mapping system may be implemented.
FIG. 6A is a block diagram that illustrates an embodiment of an example obstruction mapping system.
FIG. 6B is a block diagram that illustrates an embodiment of an example controller for the example obstruction mapping system of FIG. 6A.
FIG. 7 is a flow diagram that illustrates an embodiment of an example obstruction mapping method.

### DESCRIPTION OF EXAMPLE EMBODIMENTS

### Overview

In one embodiment, a method comprising, while traversing a field, monitoring for changes in satellite tracking; and providing a map of one or more obstructions based on satellite data recorded proximally to a detected change in the satellite tracking.

### Detailed Description

Certain embodiments of obstruction mapping systems and methods are disclosed that use satellite data recorded during traversal of a field in an effort to map an obstruction or obstructions in, around, and/or of the field. The satellite data is used (e.g., by a Global Navigation Satellite Systems (GNSS) receiver) to compute the azimuth and elevation of one or more satellites and a coordinate position (e.g., longitude, latitude, altitude) of a machine host. The satellite data used is recorded at a time corresponding to (e.g., immediately before) a change in satellite tracking. In other words, upon detecting a change, the last recorded satellite data is used. For instance, a change in satellite tracking may be manifested as a loss of satellite signals due to an obstruction, or a newly detected satellite signal due to an added tracked satellite (e.g., that has come into view). The obstructions may include one or more of a variety of vegetation (e.g., trees) in or around the field, and/or other obstructions that are natural (e.g., hills or valleys, rock formations) or man-made (e.g., other machines, buildings, etc.). The map provides (e.g., based on triangulation computations) an indication of the size of the obstruction, and is used (along with Dilution of Precision (DOP) computations) to determine an accuracy map to anticipate a degradation of position, enabling implementation of one or more actions that enable correction or mitigate the anticipated degraded performance. For instance, an embodiment of the obstruction mapping system may enable a machine to seamlessly implement an alternative positioning method, or the obstruction map (or accuracy map) may be used to enable diagnosis of positioning system performance issues. As an example of the latter scenario, in situations when customers have experienced less than desirable performance from a guidance system, a dealer may visit the site and use the map(s) to determine, for instance, the presence of too many tall trees along the border of the field and their impact on performance.

Digressing briefly, in existing systems, GNSS receivers produce the best position possible with the satellite data that is available. A partially blocked sky view may severely affect the quality of the position that the GNSS receiver produces. As GNSS receivers may be operated anywhere in the world, there are few, if any, constraints about the environment to use as leverage for providing a solution. On the other hand, in agriculture, farmers repeatedly operate in fixed areas (fields), which is an application that constrains the problem and provides an opportunity to use an existing GNSS receiver to monitor a change in tracking of satellites. Certain embodiments of obstruction mapping systems map the obstructions based on satellite data gathered during traversal(s) of the field and use the map for satellite selection or in determining how the GNSS positioning is used in conjunction with other sensors during times when reception of satellite signals is affected by the obstructions.

Having summarized certain features of obstruction mapping systems of the present disclosure, reference will now be made in detail to the description of the disclosure as illustrated in the drawings. While the disclosure will be described in connection with these drawings, there is no intent to limit it to the embodiment or embodiments disclosed herein. For instance, in the description that follows, one focus is on the agricultural industry in general and, more particularly, agricultural machines that host a GNSS receiver. However, it should be appreciated that some embodiments of obstruction mapping systems may be used in other industries to diagnose and/or resolve satellite reception and/or machine (mobile) or vehicle (machines and vehicles used interchangeably) guidance issues, and hence are contemplated to be within the scope of the disclosure. Also, though described as transported by a machine host, it should be appreciated that some embodiments of obstruction mapping systems may include portable GNSS receivers used by, for instance, a hiker to provide an indication of when positioning accuracy or precision may be compromised by obstructions. Further, although the description identifies or describes specifics of one or more embodiments, such specifics are not necessarily part of every embodiment, nor are all various stated advantages necessarily associated with a single embodiment or all embodiments. On the contrary, the intent is to cover all alternatives, modifications and equivalents included within the spirit and scope of the disclosure as defined by the appended claims. Further, it should be appreciated in the context of the present disclosure that the claims are not necessarily limited to the particular embodiments set out in the description.

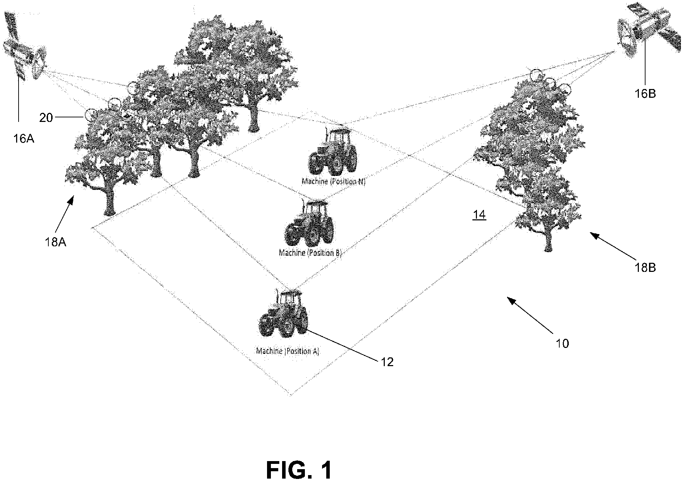

FIG. 1 is a schematic diagram that illustrates an example environment 10 in which an embodiment of an example obstruction mapping system may be implemented. It should be appreciated within the context of the present disclosure that the environment 10 is merely illustrative, and that other environments with different obstructions and/or machines may be involved and hence are contemplated to be within the scope of the disclosure. The environment 10 is schematically depicted as an overlaid, time-lapse of a machine 12 as it traverses a field 14. The machine 12 is equipped with an obstruction mapping system. The machine 12 traverses the field 14 at positions A, B, through N. In one embodiment, the machine 12 may be equipped with a positioning system that assists a guidance system in autonomous or semi-autonomous traversal of the field 14. For instance, the positioning system may comprise a GNSS receiver, and the guidance system may provide auto-steer functionality as is known to one having ordinary skill in the art. In some embodiments, the machine 12 may be equipped with a positioning system, but not a guidance system (i.e., traversal may be according to purely operator control). During traversal through positions A-N of the field 14, a positioning system of the machine 12 receives satellite data from plural satellites, such as satellites 16A and 16B. It should be appreciated that the quantity of satellites 16A, 16B is merely illustrative, and that additional satellites is to be expected in practice. Outlining portions of the field are obstructions 18 (18A, 18B), depicted in this example as trees. The positioning system of the machine 12 receives satellite data from the satellites 16A, 16B, as shown by the line projections between the satellites 16A, 16B and the machine 12. Also noted is that the obstructions 18 (18A and 18B) present an obstacle to the reception of the satellite signals in the line of sight, such as shown by the minimum elevation at which the satellite can be tracked as denoted by the circles 20 at the top of the obstructions 18. That is, when the line of sight is such that it passes beneath the minimum elevation, a loss (e.g., complete or substantial loss) of signal reception may occur. The obstructions 18 may degrade the performance of the positioning system of the machine 12 in the absence of an obstruction mapping system.

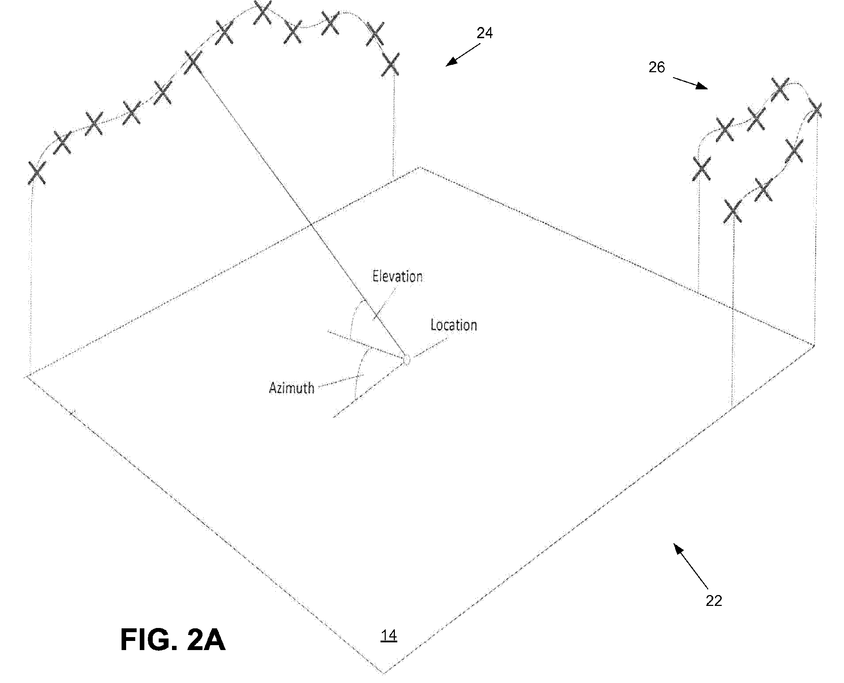

Referring now to FIG. 2A, shown is a schematic diagram depicting an example obstruction map 22 that may be provided (e.g., generated) by an embodiment of an example obstruction mapping system based on recording satellite data during traversal of the environment of FIG. 1. In this example, the map 22 is a horizon map (e.g., map of obstructions 18 (FIG. 1)) proximal to the border of the field 14. The map 22 comprises a set of data points 24 and 26 representing the obstructions 18A and 18B, respectively. The representation may be a stereoscopic (e.g., two or more dimensions, such as three-dimensional (3D)) representation of the entirety (or partially, such as an outline) of the obstructions 18. The obstruction mapping system generates the map 22 based on satellite data gathered during one or more passes of the machine 12 (FIG. 1) across the field 14. In one embodiment, while the machine 12 (FIG. 1) traverses the field, the obstruction mapping system monitors for changes in satellite tracking (e.g., tracking by the GNSS receiver of the positioning system). For purposes of illustration, assume the GNSS receiver is tracking a plurality of satellites at time intervals of T, T+1 through T+15 (and so on, the times of tracking between T+1 and T+15 not shown for brevity). Table 1 provides an illustrative example of this satellite tracking:

**Table 1**

| Time (T) | Time (T+1) | Time (T+15) |
|---|---|---|
| 3 | 3 | 3 |
| 15 | 17 | 17 |
| 17 | | 9 |

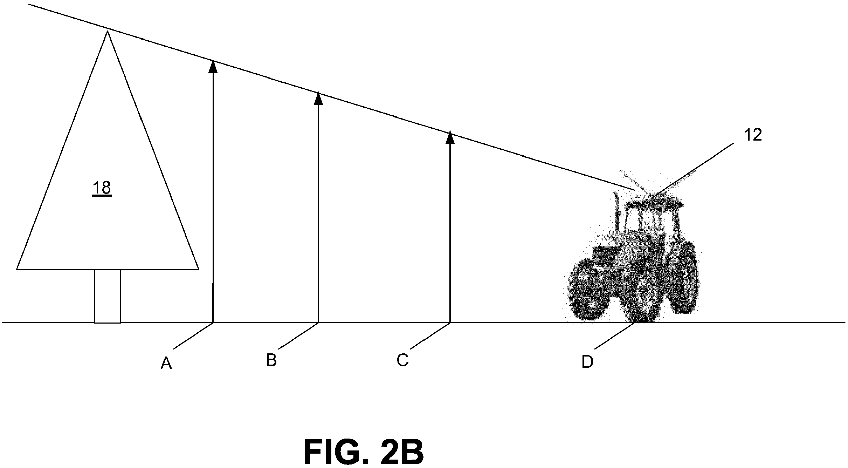

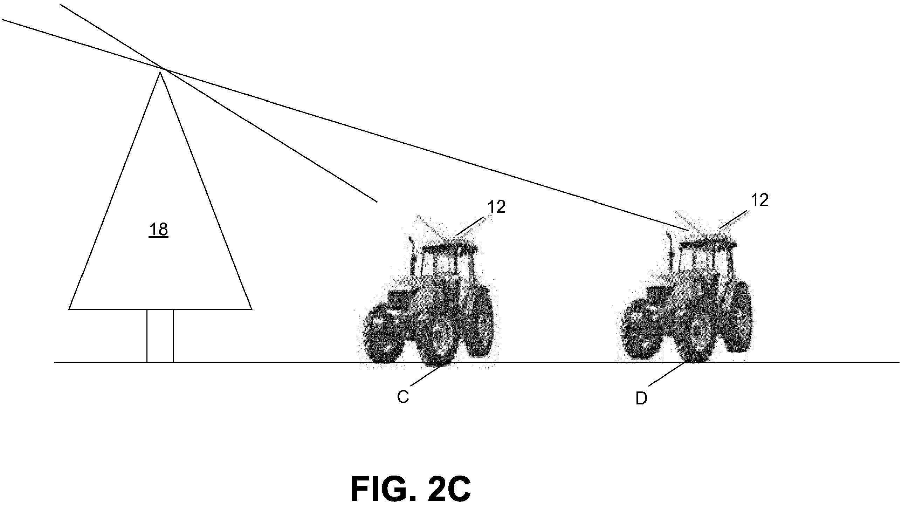

As is known, GNSS satellites of each constellation may be represented with unique numbers. For illustrative purposes, the values of 3, 15, 17, etc. are used in Table 1 to represent the respective satellites being tracked. The satellites detected at time equals T are 3, 15, and 17. At T+1, the satellites tracked are satellites 3 and 17. At T+15, the satellites tracked include satellites 3, 17, and 9. At time equals T+1, it is noted that one satellite is not listed (e.g., satellite 15) versus at time equals T. In other words, the signal from the satellite 17 has been lost (e.g., occluded by an obstruction), representing a satellite tracking transition. For instance, the loss may occur when the line of sight passes beneath the minimum elevations denoted by the circles 20 in FIG. 1. The obstruction mapping system detects this change in satellite tracking (e.g., due to the loss in satellite signal reception), and uses the recorded satellite data from time equals T to compute the azimuth and elevation of the satellite (satellite 15) and the machine position for time equals T. In other words, the loss of satellite signals from satellite 15 corresponds to a data point used for mapping, as described below. Continuing, at time equals T+15, it is noted that a satellite signal from satellite 5 is gained, and hence another data point results due to the change in satellite tracking. Note that the quantity of satellites is for simplicity, as there may be significantly more satellites to track in practice. The obstruction mapping system thus uses satellite data at a time corresponding to the detected change in tracking to compute the azimuth and elevation. For instance, for gaining a satellite from times T to T+1, the obstruction mapping system computes the azimuth and the elevation of the new satellite (and machine position) using satellite data recorded at T+1. However, for losing a satellite from T to T+1, the obstruction mapping system computes the azimuth and elevation of the lost satellite (and machine position) using satellite data recorded at T. Note that through the computations of the azimuth and elevation of the tracked satellites, and the coordinate position (e.g., latitude, longitude, and altitude) of the machine 12, the obstruction mapping system determines a size and location of the obstruction (e.g., using the cutoff angle of reception of the signals and triangulation), resulting in the data points 24 and 26, or generally, the map 22, shown in FIG. 2A. For instance, and referring to FIG. 2B, given the dynamic nature of satellite movement and depth perception issues, there may be uncertainty (e.g., based on a single cutoff angle) as to the distance between the obstruction 18 and the machine 12 (e.g., whether the distance is from A, B, C, or D). However, with additional data points (e.g., data gathered at locations C and D), an embodiment of the obstruction mapping system may triangulate the obstruction 18 as being located, for instance, at a field boundary as depicted in FIG. 2C. Note that in some embodiments, the computations for the azimuth and elevation when there is detected signal loss may be a projected value based on almanac (orbit) data received by the satellites, or in some embodiments, a computed value based on satellite data recorded before and after the occlusion (e.g., an average).

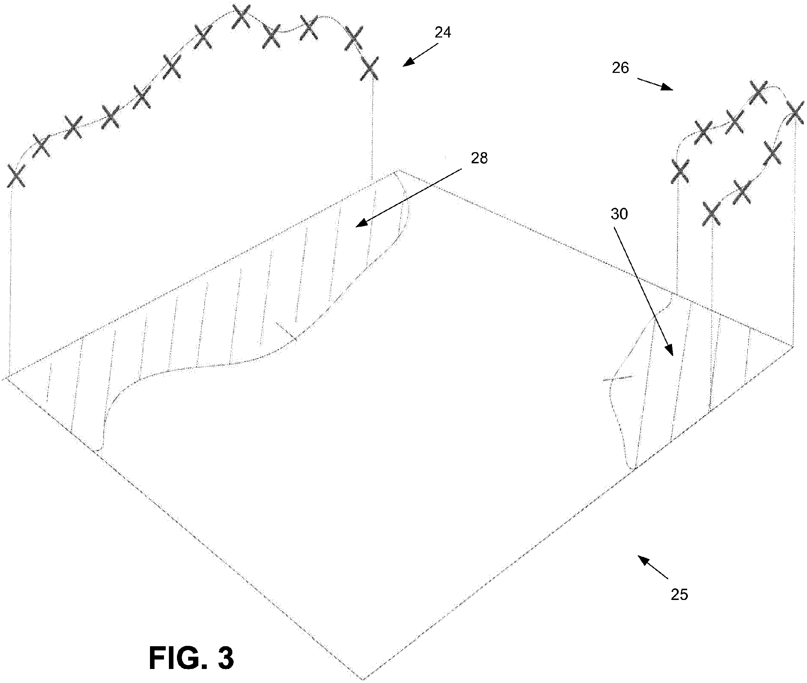

FIG. 3 is a schematic diagram that illustrates an accuracy map 25 that enables anticipation of positions with insufficient precision by an embodiment of an example obstruction mapping system based on the map 22 of FIG. 2A. For instance, using Dilution of Precision (DOP) computations, including Geometric DOP (GDOP) and Horizontal DOP (HDOP), the obstruction mapping system determines areas 28 and 30, corresponding to data points 24 and 26, respectively, where there is likely to be loss of satellite data, likely resulting in an imprecise position determination. As is known, each DOP computation results in a value that represents the goodness of the distribution of satellites across the sky. For instance, if all satellites were clumped in one part of the sky, a poor DOP value (high value) results. Likewise, for a good distribution of satellites, a good DOP value (low value) results. The obstruction mapping system uses satellite data (e.g., Almanac or generally, orbital data) to predict where the satellites are at any given time, and based on the map 22, the satellites that are occluded at given points and times in the field are removed from the DOP computations. The obstruction mapping system determines the DOP in this manner for the entire field, and those areas of high DOP (e.g., 28 and 30, where the satellites are occluded) are identified as areas of anticipated poor precision and/or accuracy as shown in the map 25 of FIG. 3. Based on the identification of these areas 28 and 30, an alternative system (e.g., sensors, algorithms, such as from an inertial guidance system) may be used to determine the position while traversing these areas 28 and/or 30.

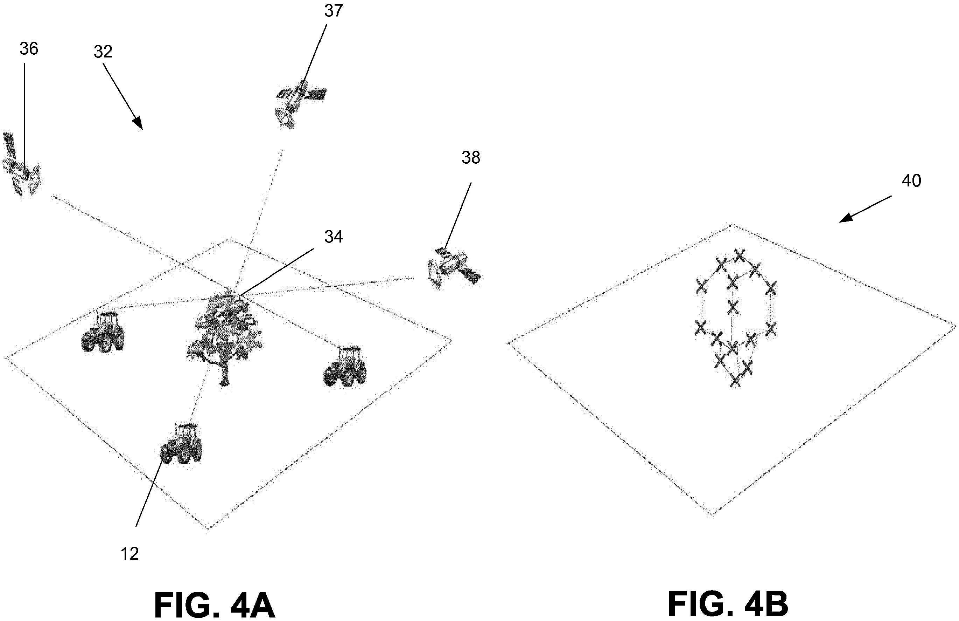

FIG. 4A is a schematic diagram that illustrates another example environment 32, which includes an in-field obstruction 34 (e.g., a tree). Similar to FIG. 1, the machine 12 is shown in an overlaid, time-lapsed depiction of various positions relative to the obstruction 34. The machine 12 is unable to track satellite signals at the various positions due to the obstruction 34 between the machine 12 and the satellites 36, 37, and 38 (where the quantity is merely illustrative). An embodiment of the obstruction mapping system monitors tracking of the satellites and uses, as data points for map generation, the satellite data recorded at a time corresponding to the loss or gain of satellites (and hence satellite signals). Similar to the procedure described above, the obstruction mapping system computes the machine position, azimuth, and elevation based on the satellite data (data points) and using triangulation, maps the obstruction 34 (FIG. 4A), as shown by the map 40 in FIG. 4B. Further, the obstruction mapping system determines an accuracy map (e.g., based on DOP computations, as described previously) to enable the identification of areas anticipated to have insufficient precision with regard to positioning performance.

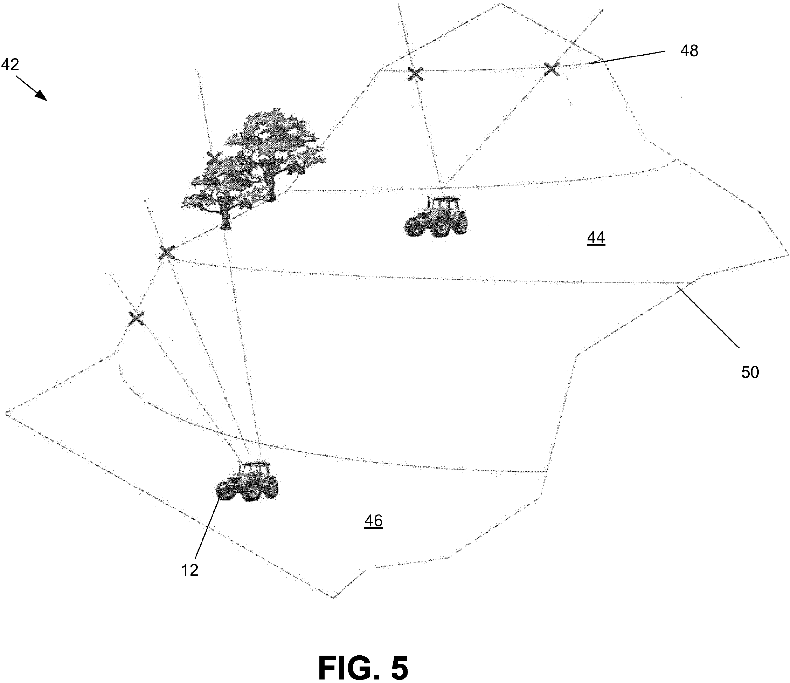

Although the description above focuses on trees as an example obstruction, it should be appreciated that other obstructions may causes a loss of signal reception. For instance, and referring to FIG. 5, shown is a schematic diagram that illustrates an example undulating environment 42 with fields 44 and 46, and the machine 12 at various time-lapsed positions of the environment 42 (e.g., along fields 44 and 46). The undulating environment 42 further comprises one or more ridge lines, such as ridge lines 48 and 50 that are located between plural satellites and the machine 12 as the machine 12 is located at the respective fields 44 and 46. The ridge lines 48 and 50 present obstacles to satellite signal reception, as the ridge lines 48 and 50 interfere with the line of sight. An embodiment of an obstruction mapping system uses the satellite data recorded at a time corresponding to a change in satellite tracking (e.g., loss of the satellite signals), and based on well-known techniques of triangulation, provides a map of the obstructions as similarly described above. Also similar to the description above, the obstruction mapping system determines areas of the fields 44 and 46 based on the map and DOP computations that are anticipated to be detrimental to positioning performance, and then implements actions accordingly (e.g., alternative positioning or guidance system or methods). In some embodiments, the actions implemented may include providing the map to a dealer or service tech to provide further insight into positioning or guidance issues.

Although described as individual example environments, it should be appreciated that certain embodiments of obstruction mapping systems may provide a mapping of environments that possess the features of any combination of the environments and/or obstructions depicted in FIGS. 1, 4A, and 5.

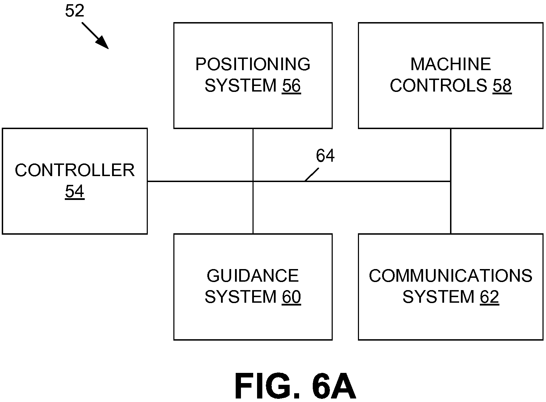

Attention is now directed to FIG. 6A, which illustrates an embodiment of an example obstruction mapping system 52. It should be appreciated within the context of the present disclosure that some embodiments may include additional components or fewer or different components, and that the example depicted in FIG. 6A is merely illustrative of one embodiment among others. The obstruction mapping system 52 may reside entirely in the machine (e.g., machine 12, FIG. 1), or in some embodiments, functionality of the obstruction mapping system 52 may be distributed among plural devices or systems (e.g., within the machine and external to the machine). In some embodiments, functionality of the obstruction mapping system 52 may reside in a single device, such as a positioning device carried by a person. In one embodiment, the obstruction mapping system 52 comprises one or more controllers, such as controller 54. In one embodiment, the controller 54 comprises an electronic control unit (ECU). The controller 54 is coupled to a positioning system 56, machine controls 58, a guidance system 60, and a communications system 62, all coupled to each other via a network 64. It should be appreciated by one having ordinary skill in the art, in the context of the present disclosure, that functionality for the various depicted components may be combined in a single device (e.g., single ECU), or further distributed among additional components locally or among disparate locations. The network 64 may be embodied as a controller area network (CAN), such as in conformance to ISO 11898, ISO 11783, etc.), though in some embodiments, other protocols and/or standards (e.g., RS 232) may be used.

In one embodiment, the controller 54 comprises a computer architecture, including a processor, memory, and input/output interfaces, including a user interface such as one or a combination of a display terminal or screen, keyboard and/or other devices, such as a mouse, stylus, microphone, joystick, among others user-interface components well-known to one having ordinary skill in the art. The controller 54 enables an operator to centrally access the various functionality of the machine 12, such as auto-steer functionality of the guidance system 60 and the GNSS receiver functionality of the positioning system 56. In some embodiments, user interface functionality may be provided with each ECU and/or component.

The positioning system 56 comprises a GNSS receiver, and is configured to access one or more constellations of satellites to track satellites and receive satellite data, including Almanac data and data for determining azimuth and elevation for the satellites. In addition, based on satellite data (e.g., clocking and/or phase information), the positioning system 56 triangulates its position (and/or the position of the machine 12, FIG. 1), enabling the determination of the machine latitude, longitude, and altitude. The positioning system 56 is further configured to compute the azimuth and elevation based on the satellite data.

The machine controls 58 collectively comprise the various actuators, sensors, and/or subsystems residing on the machine 12 (FIG. 1), including those used to control machine navigation (e.g., speed, direction (such as a steering system), etc.), implement (e.g., header or trailer) position, and/or control of internal processes, among others.

The guidance system 60 comprises the various components that enable semi-autonomous or autonomous traversal of a field by the machine 12 (FIG. 1), including gyroscopes, accelerometers, among other sensors. The guidance system 60 cooperates with the machine controls 58 and the positioning system 56 to provide, for instance, auto-steer functionality.

The communications system 62 enables wireless (and/or wired) communication with other devices or systems, such as remote connection to external networks or devices. In one embodiment, the communications system 62 comprises a radio frequency (RF) modem and cellular modem to enable wireless fidelity (Wi-Fi) and cellular communications, respectively. In some embodiments, the communications system 62 may be omitted, or in some embodiments, carried by the operator (e.g., not a part of the machine 12).

The controller 54 is configured to receive and process information from the positioning system 56, machine controls 58, guidance system 60, and communications system 62. For instance, the controller 54 may receive input from a user interface, such as to enable intervention of machine operation by the operator, to provide feedback of a change in speed or direction and/or or an impending change or need or recommendation for change, or to commence and ultimately engage auto-guidance. In some embodiments, the controller 54 may compute and then (optionally) present the map of obstructions, as well as compute and present areas of imprecision (e.g., the accuracy map). In some embodiments, the controller 54 may receive input from the machine controls 58 (e.g., such as to enable feedback as to the position or status of certain devices, such as a header height and/or width, and/or speed, direction of the machine 12 of FIG. 1, etc.). The controller 54 may further be configured with software and/or firmware that are used in conjunction with the various components, such as guidance software to be used with the guidance system 60, machine controls 58, and the positioning system 56, and obstruction mapping software to be used in conjunction with the positioning system 56. In some embodiments, such application software may reside in the respective ECU. The controller 54 is also configured to cause the access of data from a data structure via the communications system 62, such as to forward satellite data and machine position information to a remote terminal and to receive an obstruction and/or accuracy map, field map, and/or instructions involving methods to mitigate the anticipated degradation based on the map. In other words, one or more of the functionality of the obstruction mapping system 52 may be performed remotely to benefit from increased processing power and/or remote control or management of machine operations. In some embodiments, one or more of the functionality of the controller 54 may be incorporated in the other devices 56, 58, 60, and/or 62.

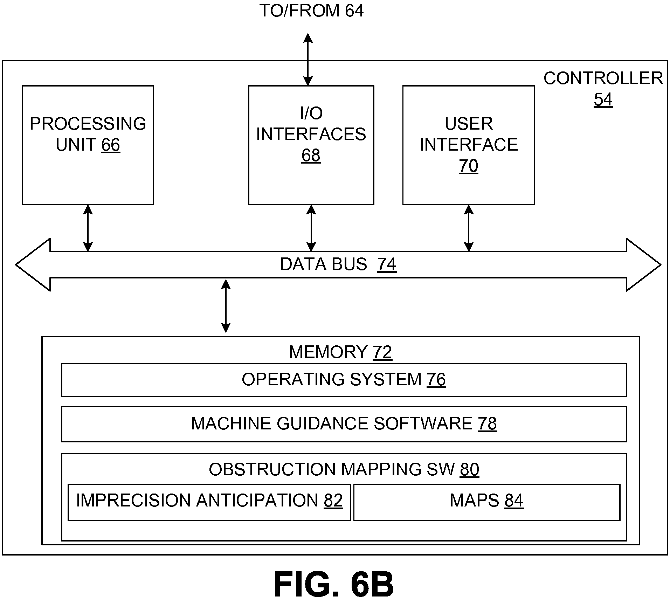

FIG. 6B further illustrates an example embodiment of the controller 54. One having ordinary skill in the art should appreciate in the context of the present disclosure that the example controller 54 is merely illustrative, and that some embodiments of controllers may comprise fewer or additional components, and/or some of the functionality associated with the various components depicted in FIG. 6B may be combined, or further distributed among additional or other components shown in FIG. 6A in some embodiments. It should be appreciated that, though described in the context of residing in a machine 12 (FIG. 1), in some embodiments, as indicated above, one or more of the following functionality may be performed remote from (e.g., external to) the machine 12 or without the machine 12 in some embodiments. Referring to FIG. 6B, with continued reference to FIG. 6A, the controller 54 is depicted in this example as a computer system, but may be embodied as a programmable logic controller (PLC), FPGA, ASIC, among other devices. It should be appreciated that certain well-known components of computer systems are omitted here to avoid obfuscating relevant features of the controller 54. In one embodiment, the controller 54 comprises one or more processing units, such as processing unit 66, input/output (I/O) interface(s) 68, user interface 70, and memory 72, all coupled to one or more data busses, such as data bus 74. Note that in some embodiments, user interface 70 may be a separate component accessed over the network 64 via the I/O interfaces 68. The memory 72 may include any one or a combination of volatile memory elements (e.g., random-access memory RAM, such as DRAM, and SRAM, etc.) and nonvolatile memory elements (e.g., ROM, hard drive, tape, CDROM, etc.). The memory 72 may store a native operating system, one or more native applications, emulation systems, or emulated applications for any of a variety of operating systems and/or emulated hardware platforms, emulated operating systems, etc. In some embodiments, the memory 72 may store one or more field maps that were recorded from a prior traversal of a given field and waylines, enabling autonomous (or semi-autonomous) traversal of a given field when auto-guidance is engaged by the operator. In the embodiment depicted in FIG. 6B, the memory 72 comprises an operating system 76, machine guidance software 78, and obstruction mapping software 80. The obstruction mapping software 80 comprises imprecision anticipation software 82 and a data structure corresponding to a mapping (e.g., stereoscopic mapping) of obstructions and accuracy, denoted as maps 84. It should be appreciated that in some embodiments, additional or fewer software modules (e.g., combined functionality) may be employed in the memory 72 or additional memory. In some embodiments, a separate storage device may be coupled to the data bus 74 (or network 64, FIG. 6A), such as a persistent memory (e.g., optical, magnetic, and/or semiconductor memory and associated drives).

The machine guidance software 78 enables autonomous or semi-autonomous travel by the machine 12 (FIG. 1) based on waylines and further, positioning data provided by the positioning system 56 (e.g., FIG. 6A, accessed via I/O interfaces 68). Wayline generation and machine guidance based on the positioning data and the waylines is known in the art, and discussion of the same is omitted here for brevity. The obstruction mapping software 80 monitors for changes in tracking of satellites by the positioning system 56, and stores in memory 72 the machine coordinates, azimuth, and elevation determined by the positioning system 56. In some embodiments, the satellite data may be stored in memory 72, or in some embodiments, stored in memory of the positioning system 56. In some embodiments, the monitoring may be performed in the positioning system 56. The obstruction mapping software 80 computes an obstruction map based on the satellite data recorded proximal to the a change in tracking (e.g., for a gain in satellites, at the time of the gain, and for lost satellites, at the last recorded time before the loss in some embodiments). For instance, the satellite data recorded proximal to the transition in satellite tracking is used to determine the azimuth, elevation, and machine coordinates and further used to perform triangulation, which in turn is used to determine a map of obstructions. The imprecision anticipation software 82 uses the obstruction map and DOP computations to determine an accuracy map to enable the identification of areas of the field that, when traversed by the machine 12, are anticipated to cause a loss of satellite data due to the obstructions, and hence imprecision in a positioning determination of the machine 12. The obstruction mapping software 80 may further be configured to implement, or cause implementation (e.g., via communication of a prompt or warning to the operator), of one or more actions. For instance, when based on a high value for DOP, the obstruction mapping software 80 may signal to the guidance system 60 (FIG. 6A) or the machine guidance software 78 to transition to another positioning method (e.g., an alternative to GNSS-based guidance, such as to implement dead-reckoning or other inertial guidance sensors/software) or to use a supplemental positioning method and possibly weight the GNSS based positioning at a lower significance. In some embodiments, the obstruction mapping software 80 may cause the communication (e.g., via the communications system 62) of the maps 84 to a remote location, such as a dealer, in conjunction with an indication of a loss of satellite signaling for further diagnosis.

In some embodiments, the obstruction mapping software 80 provides for continual or periodic validation of the maps 84. That is, it is anticipated that, from time to time, there may be erroneous or transitory loss of reception. As the data structure (e.g., the maps 84) is developed over multiple passes of a field by the machine 12, such data may be removed and/or validated. For instance, if more than one machine is operating in the field, it is possible for the view of the sky (e.g., the line of sight) to be temporarily impeded by a non-permanent or transitory object. Similarly, if the field is edged by deciduous trees instead of evergreens, for instance, blockages may occur at one part of the year (e.g., summer) but not in other parts of the year (e.g., winter).

Execution of the machine guidance software 78 and the obstruction mapping software 80 may be implemented by the processing unit 66 under the management and/or control of the operating system 76. In some embodiments, the operating system 76 may be omitted and a more rudimentary manner of control implemented. The processing unit 66 may be embodied as a custom-made or commercially available processor, a central processing unit (CPU) or an auxiliary processor among several processors, a semiconductor based microprocessor (in the form of a microchip), a macroprocessor, one or more application specific integrated circuits (ASICs), a plurality of suitably configured digital logic gates, and/or other well-known electrical configurations comprising discrete elements both individually and in various combinations to coordinate the overall operation of the controller 54.

The I/O interfaces 68 provide one or more interfaces to the network 64 (FIG. 6A) and other networks. In other words, the I/O interfaces 68 may comprise any number of interfaces for the input and output of signals (e.g., analog or digital data) for conveyance over the network 64. The input may comprise input by an operator (local or remote) through the user interface 70 (e.g., a keyboard, joystick, steering wheel, touch-display, or mouse or other input device (or audible input in some embodiments)), and input from signals carrying information from one or more of the components of the obstruction mapping system 52 (FIG. 6A).

When certain embodiments of the controller 54 are implemented at least in part as software (including firmware), as depicted in FIG. 6B, it should be noted that the software can be stored on a variety of non-transitory computer-readable medium for use by, or in connection with, a variety of computer-related systems or methods. In the context of this document, a computer-readable medium may comprise an electronic, magnetic, optical, or other physical device or apparatus that may contain or store a computer program (e.g., executable code or instructions) for use by or in connection with a computer-related system or method. The software may be embedded in a variety of computer-readable mediums for use by, or in connection with, an instruction execution system, apparatus, or device, such as a computer-based system, processor-containing system, or other system that can fetch the instructions from the instruction execution system, apparatus, or device and execute the instructions.

When certain embodiment of the controller 54 are implemented at least in part as hardware, such functionality may be implemented with any or a combination of the following technologies, which are all well-known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

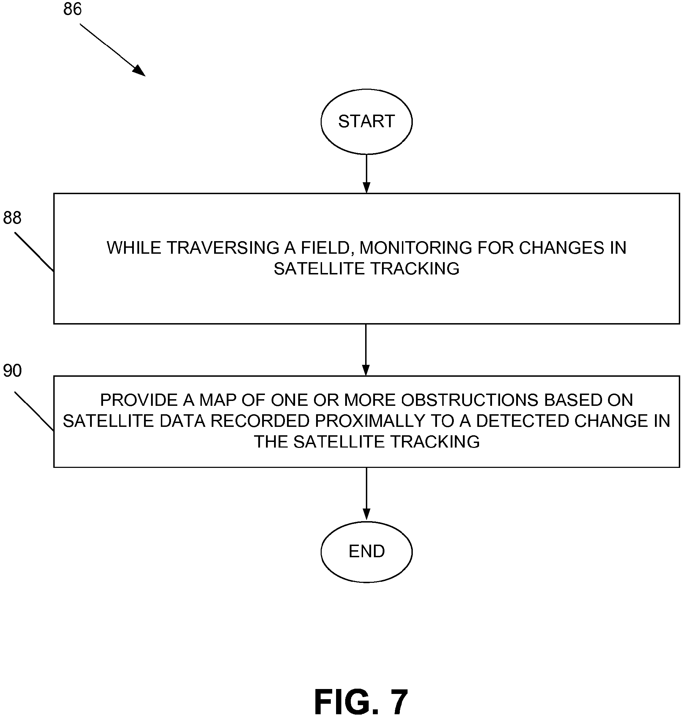

Having described certain embodiments of a obstruction mapping system 52, it should be appreciated within the context of the present disclosure that one embodiment of a obstruction mapping method, denoted as method 86 as illustrated in FIG. 7, comprises while traversing a field, monitoring for changes in satellite tracking (88); and providing a map of one or more obstructions based on satellite data recorded proximally to a detected change in the satellite tracking (90).

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It should be emphasized that the above-described embodiments of the present disclosure, particularly, any "preferred" embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and protected by the following claims.

## Claims

1. A method, comprising:
while traversing a field, monitoring for changes in satellite tracking; and
providing a map of one or more obstructions based on satellite data recorded proximally to a detected change in the satellite tracking.

2. The method of claim 1, wherein providing the map comprises computing a coordinate position and a respective azimuth and elevation of the tracked satellites based on the satellite data last recorded prior to the detected change.

3. The method of claim 1, wherein the one or more obstructions are located proximal to a border of the field, within the field, or a combination of both.

4. The method of claim 1, wherein the one or more obstructions comprise a topography of the field.

5. The method of claim 1, wherein providing the map comprises computing a size and location of the one or more obstructions based on the satellite data.

6. The method of claim 1, further comprising computing for the field a degradation in reception of satellite signals based on the map, the degradation that is based on the one or more obstructions more pronounced than the degradation that is based on no obstructions.

7. The method of claim 6, wherein the computing comprises dilution of precision computations.

8. The method of claim 6, further comprising implementing an action based on the computed degradation.

9. The method of claim 1, further comprising validating the map based on additional traversals of the field, wherein validating corrects for a transitory nature of the one or more obstructions.

10. The method of claim 1, further comprising using the map to diagnose positioning issues in the field.

11. A system, comprising:
a machine comprising a global navigation satellite system (GNSS) receiver and a controller coupled to the GNSS receiver, the controller configured to:
monitor for changes in satellite tracking as the machine traverses a field; and
provide a map of one or more obstructions based on satellite data recorded proximally to a detected change in the satellite tracking.

12. The system of claim 11, wherein the controller is configured to compute a coordinate position and a respective azimuth and elevation of the tracked satellites based on the satellite data last recorded prior to the detected change.

13. The system of claim 11, wherein the one or more obstructions are located proximal to a border of the field, within the field, or a combination of both.

14. The system of claim 11, wherein the one or more obstructions comprise a topography of the field.

15. The system of claim 11, wherein the controller is configured to provide the map by computing a size and location of the one or more obstructions based on the satellite data.

16. The system of claim 11, wherein the controller is configured to compute for the field a degradation in reception of satellite signals based on the map, the degradation based on the one or more obstructions more pronounced than the degradation based on no obstructions.

17. The system of claim 16, wherein the controller is configured to compute the degradation by performing dilution of precision computations.

18. The system of claim 16, wherein the controller is further configured to implement an action based on the degradation computations.

19. The system of claim 11, wherein the controller is further configured to validate the map based on additional traversals of the field.

20. A non-transitory computer-readable medium encoded with executable code, the executable code, when executed by one or more processors, configured to:
monitor for changes in satellite tracking; and
provide a map of one or more obstructions in a field based on satellite data recorded proximally to a detected change in the satellite tracking.
